# FASCICULE DE BREVET EUROPEEN

(11) **EP 4 101 918 B1**
(45) Date de publication et mention de la délivrance du brevet: **07.02.2024**
(21) Numéro de dépôt: 22176958.1
(22) Date de dépôt: 02.06.2022
(51) Int. Cl.: C10L 3/10, F25J 3/02

(54) **PROCÉDÉ DE SÉPARATION ET DE LIQUÉFACTION DU MÉTHANE ET DU DIOXYDE DE CARBONE AVEC SOLIDIFICATION DU DIOXYDE DE CARBONE À L'EXTÉRIEUR DE LA COLONNE DE DISTILLATION**
VERFAHREN ZUR TRENNUNG UND VERFLÜSSIGUNG VON METHAN UND KOHLENDIOXID MIT VERFESTIGUNG DES KOHLENDIOXIDS AUSSERHALB DER DESTILLATIONSSÄULE
METHOD FOR SEPARATION AND LIQUEFACTION OF METHANE AND CARBON DIOXIDE WITH SOLIDIFICATION OF CARBON DIOXIDE OUTSIDE THE DISTILLATION COLUMN

(30) Priorité: 09.06.2021 FR 2106088
(43) Date de publication de la demande: 14.12.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Tovar Ramos, Jorge Ernesto, Hangzhou, 310012 (CN)
(74) Mandataire: Air Liquide

(56) Documents cités:
- WO-A1-2012/029021
- WO-A2-2011/135538
- US-A- 4 152 129
- US-A- 5 842 357
- US-A1- 2015 159 945
- YOUSEF AHMED M. ET AL: "New approach for biogas purification using cryogenic separation and distillation process for CO2 capture", ENERGY, vol. 156, 16 mai 2018 (2018-05-16), pages 328-351, XP055795448, AMSTERDAM, NL ISSN: 0360-5442, DOI: 10.1016/j.energy.2018.05.106

## Description

La présente invention est relative à une installation et à un procédé de production de méthane liquide et de dioxyde de carbone liquide à partir d'un flux de biogaz.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH₄) et du dioxyde de carbone (CO₂) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO₂, de 0 à 15% d'azote, de 0 à 5% d'oxygène et des composés traces.

Après une étape de prétraitement de ces contaminants, le biogaz peut être utilisé en l'état pour alimenter une chaudière ou une unité de cogénération, ou alors épuré pour obtenir un gaz qui répond aux spécifications pour injection dans le réseau de gaz naturel (ex: 3% de CO2 max).

Dans de nombreuses régions en Europe et dans le monde, le réseau de gaz naturel n'est pas toujours accessible à proximité des zones de production de déchets fermentescibles. De plus, s'il n'y a pas de besoin de chaleur sur le lieu de production de biogaz, en fonction du prix d'achat de l'électricité, la cogénération n'a pas toujours un rendement suffisant pour rentabiliser l'investissement important dans une unité de digestion. Il est alors intéressant dans ces 2 cas de transporter le biogaz vers un point de distribution ou de consommation. La liquéfaction du biogaz après épuration permettrait de transporter le biométhane à moindre coût. Selon la réglementation de certaines zones géographiques il est interdit de rejeter du CH4 dans l'environnement, ceci ajoute une contrainte supplémentaire et limite le choix des procédés de séparation du biogaz à des méthodes très efficaces.

Aujourd'hui, les procédés de purification du biogaz sont principalement basés sur des techniques d'absorption, de perméation ou d'adsorption. Ces systèmes nécessitent alors le rajout d'un module supplémentaire pour obtenir le biométhane sous forme liquide. De plus, dans la plupart des cas, le contenu en CO₂ dans le biogaz à l'issue de cette étape de purification est toujours trop important pour alimenter de tels systèmes de liquéfaction.

Il a été proposé un système de cryo piégeage basé sur les principes d'échangeurs réversibles. Ce système est basé sur la solidification du CO2 présent dans le biogaz sur une surface froide (piégeage), suivi d'une étape de sublimation ou liquéfaction du CO2 à l'aide d'une source chaude. Pour rendre une production continue de biométhane, il est alors nécessaire de travailler avec plusieurs échangeurs en parallèle. Leur solution permet de séparer et liquéfier le méthane et le CO2 en deux étapes distinctes, mais il n'est pas possible de récupérer le froid utilisé dans la solidification du CO2.

Partant de là un problème qui se pose est de fournir une méthode de séparation et de liquéfaction du méthane et du CO2 à partir de biogaz avec un minimum de perte de méthane et l'emploi d'un minimum d'opération.

Une solution de la présente invention est une unité de séparation cryogénique du méthane et du dioxyde de carbone comprenant :
- Une colonne de distillation K01 comprenant une section froide 2 en tête de colonne et une section chaude 3 en bas de colonne,
- Un moyen 4 permettant de séparer physiquement la section froide et la section chaude,
- Au moins deux récipients V04 A/B externes à la colonne de distillation permettant de mettre en contact le liquide de la section froide et la vapeur montante de la section chaude et de piéger tout le CO2 solide, et
- Un dispositif de régénération des récipients externes comprenant un moyen d'extraction d'un fluide de la colonne de distillation K01 apte à liquéfier le CO2 solide, un moyen d'introduction de ce fluide dans le ou les récipients externes en régénération de manière à entraîner la fusion du CO2 solide et un moyen de réintroduction du mélange résultant CO2 liquide - vapeur dans la colonne de distillation K01.

La présente invention a également pour objet une installation combinée de séparation cryogénique et de liquéfaction du méthane et du dioxyde de carbone compris dans un flux de biogaz, comprenant :
- Une unité de séparation cryogénique selon l'invention,
- Un moyen M1 permettant de mélanger le biogaz 1 avec un gaz de recycle R,
- Un compresseur permettant de comprimer le mélange à la pression de distillation,
- Un échangeur E01 permettant de refroidir le mélange comprimé,
- Une unité de séparation cryogénique selon la revendication 1 alimentée par le mélange refroidi et permettant de produire du méthane en tête de colonne et un liquide enrichi en CO2 en fond de colonne,
- Un échangeur E02 permettant de liquéfier le méthane produit en tête de colonne,
- Un moyen M2 permettant de séparer le méthane liquéfié en deux parties : une partie « reflux » 6 et une partie « produit » 5,
- Un moyen M3 permettant de détendre et de chauffer le liquide enrichi en CO2 récupéré en fond de colonne et de récupérer le froid du liquide enrichi en CO2, et
- Un pot séparateur V01 permettant de recevoir le flux enrichi en CO2 issu du moyen M3 et de récupérer une vapeur de tête et du CO2 liquide 7,
   Avec
- Le moyen M1 tel que le gaz de recycle R correspond à la vapeur de tête récupérée en sortie du pot séparateur V01, et
l'échangeur E01 et le moyen M3 étant confondus.

Selon le cas, l'installation selon l'invention peut présenter une ou plusieurs des caractéristiques ci-dessous :
▪ l'installation comprend en amont du moyen M1 des moyens de séchage et de désulfurisation du biogaz.
▪ L'installation comprend en amont du moyen M1 un moyen C01 de compression du biogaz à la pression du gaz de recycle R.
▪ L'installation comprend en amont du moyen M1 un moyen C01E et/ou C02E de refroidissement du biogaz à la température ambiante.
▪ l'échangeur E02 est compris dans un circuit frigorifique fermé.
▪ le circuit frigorifique met en oeuvre comme fluide frigorigène du méthane.
▪ la colonne de distillation K01 comprend un chauffage en bas de colonne.

La présente invention a également pour objet un procédé de séparation cryogénique du méthane et du dioxyde de carbone mettant en oeuvre l'unité cryogénique telle que définie précédemment comprenant :
a) Une étape d'introduction du mélange méthane - dioxyde de carbone en bas de colonne,
b) Une étape de soustraction du liquide de la section froide 2 de la colonne de distillation,
c) Une étape de soustraction de la vapeur de la section chaude 3 de la colonne de distillation,
d) Une étape d'introduction du liquide et de la vapeur soustraits aux étapes b) et c) dans au moins un récipient externe à la colonne de distillation K01 de manière à les mettre en contact et à piéger le CO2 solide,
e) Une étape de régénération d'au moins un récipient externe comprenant une sous-étape d'extraction d'un fluide de la colonne de distillation K01 apte à liquéfier le CO2 solide, une sous-étape d'introduction de ce fluide dans le ou les récipients externes en régénération de manière à entraîner la fusion du CO2 solide et une sous-étape de réintroduction du mélange résultant CO2 liquide - vapeur dans la colonne de distillation K01, et
f) Une étape de récupération du méthane en tête de colonne et un liquide enrichi en CO2 en fond de colonne.

Le liquide descendant de la section froide est mis en contact directe avec la vapeur montante de la section chaude dans des récipients externes qui opèrent dans des conditions permettant la formation de solides. Ces récipients piégeront tout le CO2 solide et seront régénérés une fois la saturation atteinte. La régénération se fera avec un fluide extrait de la colonne et le produit résultant de la fusion du CO2 sera réintroduit dans la colonne. De cette façon la gestion de solides reste maîtrisée et ne perturbe pas le fonctionnement de base de la colonne. Le fait d'extraire et de réinjecter un fluide de la colonne permet de garder le contrôle sur le bilan énergétique et massique de cette dernière, en particulier le travail utilisé dans la solidification du CO2 sera réintégré dans le cycle.

Selon le cas, le procédé de séparation cryogénique selon l'invention peut présenter une ou plusieurs des caractéristiques ci-dessous :
▪ à l'étape e) le fluide extrait de la colonne de distillation est de la vapeur issue d'une section inférieure à plus haute température de la colonne de distillation K01.
▪ l'étape d) est réalisée avec contrôle de la température dans le récipient externe.
▪ à l'étape e) au moins deux récipients externes sont régénérés en série.

La présente invention a également pour objet un procédé combiné de séparation cryogénique et de liquéfaction du méthane et du dioxyde de carbone compris dans un flux de biogaz, mettant en oeuvre l'installation combinée selon l'invention, et comprenant :
a) Une étape de mélange du biogaz 1 avec un gaz de recycle R,
b) Une étape de compression du mélange à la pression de distillation,
c) Une étape de refroidissement du mélange comprimé dans l'échangeur E01,
d) Une étape de distillation du mélange refroidi, selon le procédé tel que défini à l'une des revendications 9 à 12, dans la colonne de distillation K01 de manière à produire du méthane en tête de colonne et un liquide enrichi en CO2 en fond de colonne,
e) Une étape de liquéfaction du méthane produit en tête de colonne dans l'échangeur E02,
f) Une étape de séparation permettant de séparer le méthane liquéfié en deux parties : une partie « reflux » 6 et une partie « produit » 5,
g) Une étape de détente et de chauffage du liquide enrichi en CO2 récupéré en fond de colonne dans l'échangeur E01, et de récupération du froid du liquide enrichi en CO2 et
h) Une étape de séparation du flux enrichi en CO2 issu de l'échangeur E01 dans le pot séparateur V01 en CO2 liquide 7 et en vapeur de tête,

Avec le gaz de recycle R correspondant à la vapeur de tête produite à l'étape a).

Selon le cas, le procédé combiné selon l'invention peut présenter une ou plusieurs des caractéristiques suivantes :
▪ Le procédé comprend en amont de l'étape a) des étapes de séchage et de désulfuration.
▪ Le procédé comprend en amont de l'étape a) une étape de compression du biogaz à la pression du gaz de recycle R.
▪ Le procédé comprend en amont de l'étape a) une étape de refroidissement du biogaz à température ambiante.
▪ Le procédé comprend en aval de l'étape h) une étape de chauffage du CO2 liquide de manière à le vaporiser.
▪ l'étape e) est réalisée par refroidissement du méthane produit au moyen d'un fluide frigorigène.
▪ à l'étape b) le mélange est comprimé à une pression comprise entre 7 et 46 bar.

Le procédé selon l'invention permet de séparer et liquéfier les produits du biogaz dans une seule opération combinée distillation/liquéfaction. Les conditions opératoires des produits à l'entrée et sortie de la colonne et dans la section de recycle ont été calculées pour éviter la formation de CO2 solide.

L'intégration thermique entre les flux de la section de séparation et ceux du cycle frigorifique permet la récupération du froid utilisé dans la liquéfaction du CO2 et dans le recycle du methane liquide. Il est possible de récupérer complètement ou en partie l'énergie utilisée dans la liquéfaction du CO2 si celui-ci n'est pas souhaité en tant que produit ou qu'il est utilisable à l'état gazeux.

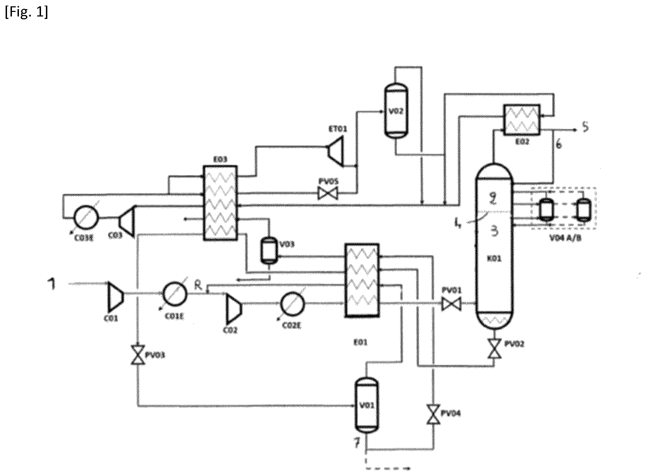

L'invention va être décrite plus en détail à l'aide de la figure 1.

Le biogaz 1 prétraité (séchage, désulfurisation) est introduit dans le procédé à pression et température atmosphériques, il est comprimé une première fois dans un compresseur C01, jusqu'à la pression du circuit de recycle (environ 8 bar). Après compression il est refroidi dans C01E à la température ambiante avec de la CW (= Cooling Water = eau de refroidissement) ou de l'air.

Ensuite il est mélangé avec un flux de recycle R, le mélange est comprimé dans un compresseur C02, à la pression de la colonne de distillation (environ 15bar) ou plus en fonction des besoins de l'échangeur en aval E01 et il est refroidi à température ambiante dans C02E, avec de la CW ou de l'air.

De préférence C01E et C02E sont des échangeurs à tube et calandre (refroidisseur des compresseurs).

Le mélange de biogaz - flux de recycle R est envoyé dans l'échangeur E01. Le but principal de cet échangeur est de refroidir le mélange en préparation pour la distillation. Le mélange peut ensuite être détendu ou alimenté directement à la colonne où il sera utilisé comme rebouilleur.

S'il n'y a pas de source de chaleur en fond de colonne il faut injecter le mélange dans le fond pour assurer la circulation de vapeur depuis le fond. S'il y a une source de chaleur dans le fond de la colonne (rebouilleur), l'introduction du mélange est fait plus haut dans la colonne. La colonne de distillation K01 sépare le méthane du dioxyde de carbone. L'alimentation de la colonne est le mélange biogaz + flux de recycle R. Cette alimentation agit comme rebouilleur principal ; une source complémentaire de chaleur peut être aussi utilisée (par exemple une résistance électrique, de la vapeur ou une partie du biogaz chaud en contact indirect).

La colonne de distillation K01 comprend une section froide 2 en tête de colonne et une section chaude 3 en bas de colonne et un moyen 4 permettant de séparer physiquement la section froide et la section chaude

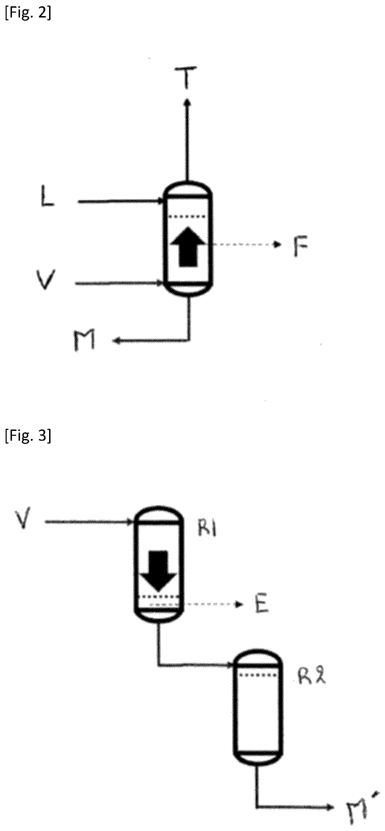

Les récipients externes V04 A/B à la colonne de distillation K01 marchent en séquences alternées de remplissage et de régénération, avec toujours au moins un récipient en remplissage pour permettre un fonctionnement continu de la colonne, sans que celle-ci soit perturbée par la présence de solides. La formation de solides sera provoquée dans les récipients par contrôle de la température. Le liquide froid L riche en CH4 provenant de la tête de la colonne de distillation K01 aura une température plus basse que celle de l'équilibre de solidification de CO2, il sera mis en contact avec la vapeur V montante (mélange à concentrations proches en CH4 et CO2) dont la température est plus élevée que celle de l'équilibre de formation du CO2 solide (cf. figure 2). Le contact des deux fluides donnera un mélange liquide-vapeur dont les concentrations et la température se trouvent dans le domaine de formation du CO2 solide F. La vitesse de saturation du récipient en solides dépendra de la pression du procédé et de la taille des récipients.

La fusion (régénération) du CO2 solide piégé dans les récipients externes se fera par contact direct avec un débit de vapeur extrait d'une section inférieure de la colonne à plus haute température. Le mélange liquide-vapeur M résultant sera réinjecté dans un étage inférieure de la colonne. Et la vapeur de tête T sera réinjecté en tête de colonne.

A tout moment il y aura au moins deux récipients en régénération en série (cf. figure 3). Le premier récipient R1 sera celui qui fournira l'essentiel du froid, le deuxième récipient R2 assurera que la température et la fraction liquide du mélange M' à réinjecter dans la colonne resteront constantes malgré l'épuisement en solide E du premier récipient. Une fois le premier récipient complètement régénéré, il pourra être mis en service pour la formation de solides. Le deuxième récipient jouera alors le rôle de fourniture du froid et le récipient récemment saturé sera mis en régénération.

Le produit en tête de la colonne est du CH4 pur à l'état vapeur. Le produit de fond est un liquide riche en CO2 à environ 95%-98%.

Le méthane en tête de la colonne est liquéfié dans l'échangeur E02, contre un fluide issue d'un circuit frigorifique fermé. Une partie 5 du méthane sort du cycle en tant que produit et l'autre partie 6 (partie reflux) est utilisée comme recycle de la colonne et réinjectée en tête de colonne.

Le liquide enrichi en CO2 récupéré en fond de colonne est détendu et chauffé dans l'échangeur E01 à contrecourant du mélange biogaz - flux de recycle R.

Le flux enrichi en CO2 issu de l'échangeur E01 est envoyé dans le pot séparateur V01.

La vapeur de tête du pot V01 est réchauffée dans l'échangeur E01 et ensuite mélangée au biogaz. Elle correspond au flux nommé précédemment « flux de recycle R ».

Le liquide du fond du pot V01 est le CO2 pur 7. Celui-ci peut, en fonctions des besoins, sortir du procédé en tant que produit ou être réchauffé dans l'échangeur E01 et dans un autre échangeur E03 du circuit frigorifique pour être vaporisé complètement avant de sortir du cycle. Notons que le CO2 pur pourra alternativement être réchauffé et vaporisé dans l'échangeur E03 sans passer par l'échangeur E01.

L'échangeur E01 utilise donc comme sources de froid : le liquide enrichi en CO2 récupéré en fond de colonne, la vapeur de tête du pot V01 appelée « flux de recycle R » en sortie de l'échangeur E01, et éventuellement le CO2 pur liquide récupéré au fond du pot V01 dans le cas où sa vaporisation est souhaitée.

Le procédé nécessite un apport de puissance frigorifique pour fonctionner. Cet apport de froid est représenté dans la figure 1 par le circuit frigorifique, il est composé :
- d'un compresseur C03 avec refroidisseur C03E.
- Un échangeur E03 qui refroidit le fluide comprimé à partir du fluide frigorigène recyclé et du froid récupéré du cycle de séparation.
- Une turbine ET01 et une vanne JT PV05, pour la détente du fluide frigorigène et production de froid.
- Un pot séparateur V02 pour séparer les phases vapeur et liquide du fluide frigorigène.
- Un échangeur E02 qui utilise la phase liquide du fluide frigorigène pour liquéfier le biométhane en tête de la colonne de distillation.
- Le fluide frigorigène utilisé dans le schéma est du CH4 mais il peut être remplacé par d'autres fluides comme N2, N2+H2, entre autres.

Ce cycle frigorifique peut être remplacé par d'autres sources de froid (en fonction de la quantité de biométhane liquide à produire). A titre d'exemple, mais pas exclusivement :
- A partir d'une source d'azote liquide ;
- Par un procédé type Cycle Brayton.

## Revendications

1. Unité de séparation cryogénique du méthane et du dioxyde de carbone comprenant :
- Une colonne de distillation K01 comprenant une section froide (2) en tête de colonne et une section chaude (3) en bas de colonne,
- Un moyen (4) permettant de séparer physiquement la section froide (2) et la section chaude (4),
- Au moins deux récipients V04 A/B externes à la colonne de distillation permettant de mettre en contact le liquide de la section froide (2) et la vapeur montante de la section chaude (3) et de piéger tout le CO2 solide, et
- Un dispositif de régénération des récipients externes comprenant un moyen d'extraction d'un fluide de la colonne de distillation K01 apte à liquéfier le CO2 solide, un moyen d'introduction de ce fluide dans le ou les récipients externes en régénération de manière à entraîner la fusion du CO2 solide et un moyen de réintroduction du mélange résultant CO2 liquide - vapeur dans la colonne de distillation K01.

2. Installation combinée de séparation cryogénique et de liquéfaction du méthane et du dioxyde de carbone compris dans un flux de biogaz, comprenant :
- Une unité de séparation cryogénique selon la revendication 1,
- Un moyen M1 permettant de mélanger le biogaz (1) avec un gaz de recycle R,
- Un compresseur permettant de comprimer le mélange à la pression de distillation,
- Un échangeur E01 permettant de refroidir le mélange comprimé,
- Une unité de séparation cryogénique selon la revendication 1 alimentée par le mélange refroidi et permettant de produire du méthane en tête de colonne et un liquide enrichi en CO2 en fond de colonne,
- Un échangeur E02 permettant de liquéfier le méthane produit en tête de colonne,
- Un moyen M2 permettant de séparer le méthane liquéfié en deux parties : une partie « reflux » (6) et une partie « produit » (5),
- Un moyen M3 permettant de détendre et de chauffer le liquide enrichi en CO2 récupéré en fond de colonne et de récupérer le froid du liquide enrichi en CO2, et
- Un pot séparateur V01 permettant de recevoir le flux enrichi en CO2 issu du moyen M3 et de récupérer une vapeur de tête et du CO2 liquide (7),
Avec
- Le moyen M1 tel que le gaz de recycle R correspond à la vapeur de tête récupérée en sortie du pot séparateur V01, et
- l'échangeur E01 et le moyen M3 étant confondus.

3. Installation selon la revendication 2, **caractérisée en ce qu'**elle comprend en amont du moyen M1 des moyens de séchage et de désulfurisation du biogaz.

4. Installation selon l'une des revendications 2 ou 3, **caractérisée en ce qu'**elle comprend en amont du moyen M1 un moyen C01 de compression du biogaz à la pression du gaz de recycle R.

5. Installation selon l'une des revendications 2 à 4, **caractérisée en ce qu'**elle comprend en amont du moyen M1 un moyen C01E et/ou C02E de refroidissement du biogaz à la température ambiante.

6. Installation selon l'une des revendications 2 à 5, **caractérisée en ce que** l'échangeur E02 est compris dans un circuit frigorifique fermé.

7. Installation selon la revendication 6, **caractérisée en ce que** le circuit frigorifique met en oeuvre comme fluide frigorigène du méthane.

8. Installation selon l'une des revendications 2 à 7, **caractérisée en ce que** la colonne de distillation K01 comprend un chauffage en bas de colonne.

9. Procédé de séparation cryogénique du méthane et du dioxyde de carbone mettant en oeuvre l'unité cryogénique telle que définie à la revendication 1 comprenant :
a) Une étape d'introduction du mélange méthane - dioxyde de carbone en bas de colonne,
b) Une étape de soustraction du liquide de la section froide (2) de la colonne de distillation,
c) Une étape de soustraction de la vapeur de la section chaude (3) de la colonne de distillation,
d) Une étape d'introduction du liquide et de la vapeur soustraite aux étapes b) et c) dans au moins un récipient externe à la colonne de distillation K01 de manière à les mettre en contact et à piéger le CO2 solide,
e) Une étape de régénération d'au moins un récipient externe comprenant une sous-étape d'extraction d'un fluide de la colonne de distillation K01 apte à liquéfier le CO2 solide, une sous-étape d'introduction de ce fluide dans le ou les récipients externes en régénération de manière à entraîner la fusion du CO2 solide et une sous-étape de réintroduction du mélange résultant CO2 liquide - vapeur dans la colonne de distillation K01, et
f) Une étape de récupération du méthane en tête de colonne et un liquide enrichi en CO2 en fond de colonne.

10. Procédé selon la revendication 9, **caractérisé en ce qu'**à l'étape e) le fluide extrait de la colonne de distillation est de la vapeur issue d'une section inférieure à plus haute température de la colonne de distillation K01.

11. Procédé selon l'une des revendications 9 ou 10, **caractérisé en ce que** l'étape d) est réalisée avec contrôle de la température dans le récipient externe.

12. Procédé selon l'une des revendications 9 à 11, **caractérisé en ce qu'**à l'étape e) au moins deux récipients externes sont régénérés en série.

13. Procédé combiné de séparation cryogénique et de liquéfaction du méthane et du dioxyde de carbone compris dans un flux de biogaz, mettant en oeuvre l'installation telle que définie dans l'une des revendications 2 à 8, et comprenant :
a) Une étape de mélange du biogaz (1) avec un gaz de recycle R,
b) Une étape de compression du mélange à la pression de distillation,
c) Une étape de refroidissement du mélange comprimé dans l'échangeur E01,
d) Une étape de distillation du mélange refroidi, selon le procédé tel que défini à l'une des revendications 9 à 12, dans la colonne de distillation K01 de manière à produire du méthane en tête de colonne et un liquide enrichi en CO2 en fond de colonne,
e) Une étape de liquéfaction du méthane produit en tête de colonne dans l'échangeur E02,
f) Une étape de séparation permettant de séparer le méthane liquéfié en deux parties : une partie « reflux » (6) et une partie « produit » (5),
g) Une étape de détente et de chauffage du liquide enrichi en CO2 récupéré en fond de colonne dans l'échangeur E01, et de récupération du froid du liquide enrichi en CO2 et
h) Une étape de séparation du flux enrichi en CO2 issu de l'échangeur E01 dans le pot séparateur V01 en CO2 liquide (7) et en vapeur de tête,
Avec le gaz de recycle R correspondant à la vapeur de tête produite à l'étape a).

14. Procédé selon la revendication 13, **caractérisé en ce qu'**il comprend en amont de l'étape a) des étapes de séchage et de désulfuration.

15. Procédé selon l'une des revendications 13 ou 14, **caractérisé en ce qu'**il comprend en amont de l'étape a) une étape de compression du biogaz à la pression du gaz de recycle R.

## Patentansprüche

1. Einheit zur kryogenen Trennung von Methan und Kohlendioxid, die Folgendes umfasst:
- eine Destillationskolonne K01, die einen kalten Abschnitt (2) am Kopf der Kolonne und einen warmen Abschnitt (3) am Boden der Kolonne umfasst,
- ein Mittel (4), das ein physisches Trennen des kalten Abschnitts (2) und des warmen Abschnitts (4) ermöglicht,
- mindestens zwei Behälter V04 A/B außerhalb der Destillationskolonne, die ein In-Kontakt-Bringen der Flüssigkeit aus dem kalten Abschnitt (2) und des aus dem warmen Abschnitt (3) aufsteigenden Dampfes und ein Abscheiden des gesamten festen CO2 ermöglichen, und
- eine Vorrichtung zum Regenerieren der externen Behälter, die ein Mittel zur Entnahme eines zum Verflüssigen des festen CO2 fähigen Fluids aus der Destillationskolonne K01, ein Mittel zum Einführen dieses Fluids in den oder die externen Behälter, der regeneriert wird bzw. die regeneriert werden, um das Schmelzen des festen CO2 zu bewirken, und ein Mittel zum Wiedereinführen der resultierenden Mischung aus flüssigem CO2 - Dampf in die Destillationskolonne K01 umfasst.

2. Kombinierte Anlage zur kryogenen Trennung und Verflüssigung von Methan und Kohlendioxid in einem Biogasstrom, die Folgendes umfasst:
- eine Einheit zur kryogenen Trennung nach Anspruch 1,
- ein Mittel M1, das ein Mischen des Biogases (1) mit einem Recyclegas R ermöglicht,
- einen Kompressor, der ein Komprimieren der Mischung auf den Destillationsdruck ermöglicht,
- einen Austauscher E01, der ein Kühlen der komprimierten Mischung ermöglicht,
- eine Einheit zur kryogenen Trennung nach Anspruch 1, die von der gekühlten Mischung gespeist wird und die Bildung von Methan am Kopf der Kolonne und einer mit CO2 angereicherten Flüssigkeit am Boden der Kolonne ermöglicht,
- einen Austauscher E02, der ein Verflüssigen des am Kopf der Kolonne gebildeten Methans ermöglicht,
- ein Mittel M2, das ein Trennen des verflüssigten Methans in zwei Teile ermöglicht: einen "Rückflussteil" (6) und einen "Produktteil" (5),
- ein Mittel M3, das ein Entspannen und Erwärmen der am Boden der Kolonne gewonnenen, mit CO2 angereicherten Flüssigkeit und eines Rückgewinnens der Kälte der mit CO2 angereicherten Flüssigkeit ermöglicht, und
- einen Abscheidebehälter V01, der ein Aufnehmen des mit CO2 angereicherten Stroms aus dem Mittel M3 und ein Gewinnen eines Kopfdampfes und von flüssigem CO2 (7) ermöglicht,
wobei
- das Mittel M1 derart beschaffen ist, dass das Recyclegas R dem am Auslass des Abscheidebehälters V01 gewonnenen Kopfdampf entspricht, und
- der Austauscher E01 und das Mittel M3 vereinigt sind.

3. Anlage nach Anspruch 2, **dadurch gekennzeichnet, dass** sie stromaufwärts vom Mittel M1 Mittel zum Trocknen und Entschwefeln von Biogas umfasst.

4. Anlage nach einem der Ansprüche 2 oder 3, **dadurch gekennzeichnet, dass** sie stromaufwärts vom Mittel M1 ein Mittel C01 zum Komprimieren des Biogases auf den Druck des Recyclegases R umfasst.

5. Anlage nach einem der Ansprüche 2 oder 4, **dadurch gekennzeichnet, dass** sie stromaufwärts vom Mittel M1 ein Mittel C01E und/oder C02E zum Abkühlen von Biogas auf Umgebungstemperatur umfasst.

6. Anlage nach einem der Ansprüche 2 bis 5, **dadurch gekennzeichnet, dass** der Austauscher E02 in einem geschlossenen Kühlkreislauf enthalten ist.

7. Anlage nach Anspruch 6, **dadurch gekennzeichnet, dass** im Kühlkreislauf Methan als Kühlmittel verwendet wird.

8. Anlage nach einem der Ansprüche 2 bis 7, **dadurch gekennzeichnet, dass** die Destillationskolonne K01 im unteren Teil der Kolonne eine Heizung umfasst.

9. Verfahren zur kryogenen Trennung von Methan und Kohlendioxid, bei dem die kryogene Einheit gemäß der Definition in Anspruch 1 verwendet wird, das Folgendes umfasst:
a) einen Schritt zum Einführen der Methan-Kohlendioxid-Mischung am Boden der Kolonne,
b) einen Schritt des Abziehens der Flüssigkeit vom kalten Abschnitt (2) der Destillationskolonne,
c) einen Schritt des Abziehens des Dampfes vom warmen Abschnitt (3) der Destillationskolonne,
d) einen Schritt des Einführens der Flüssigkeit und des Dampfes, die in den Schritten b) und c) in mindestens einen externen Behälter abgezogen wurden, in die Destillationskolonne K01, um sie in Kontakt zu bringen und das feste CO2 abzuscheiden,
e) einen Schritt des Regenerierens von mindestens einem externen Behälter, der einen Unterschritt der Entnahme eines zum Verflüssigen von festem CO2 fähigen Fluids aus der Destillationskolonne K01, einen Unterschritt des Einführens dieses Fluids in den oder die externen Behälter, der regeneriert wird bzw. die regeneriert werden, um das Schmelzen des festen CO2 zu bewirken, und einen Unterschritt des Wiedereinführens der resultierenden Mischung aus flüssigem CO2 - Dampf in die Destillationskolonne K01 umfasst, und
f) einen Schritt des Gewinnens von Methan am Kopf der Kolonne und einer mit CO2 angereicherten Flüssigkeit am Boden der Kolonne.

10. Verfahren nach Anspruch 9, **dadurch gekennzeichnet, dass** es sich in Schritt e) bei dem aus der Destillationskolonne abgenommenen Fluid um Dampf aus einem unteren Abschnitt mit einer höheren Temperatur der Destillationskolonne K01 handelt.

11. Verfahren nach einem der Ansprüche 9 oder 10, **dadurch gekennzeichnet, dass** Schritt d) mit einer Steuerung der Temperatur im externen Behälter erfolgt.

12. Verfahren nach einem der Ansprüche 9 bis 11, **dadurch gekennzeichnet, dass** in Schritt e) mindestens zwei externe Behälter in Reihe regeneriert werden.

13. Kombiniertes Verfahren zur kryogenen Trennung und Verflüssigung von Methan und Kohlendioxid in einem Biogasstrom, wobei die Anlage gemäß der Definition in einem der Ansprüche 2 bis 8 verwendet wird, und das Folgendes umfasst:
a) einen Schritt des Mischens des Biogases (1) mit einem Recyclegas R,
b) einen Schritt des Komprimierens der Mischung auf den Destillationsdruck,
c) einen Schritt des Kühlens der komprimierten Mischung im Austauscher E01,
d) einen Schritt des Destillierens der gekühlten Mischung nach dem Verfahren gemäß der Definition in einem der Ansprüche 9 bis 12 in der Destillationskolonne K01, um Methan am Kopf der Kolonne und eine mit CO2 angereicherte Flüssigkeit am Boden der Kolonne zu bilden,
e) einen Schritt des Verflüssigens des am Kopf der Kolonne gebildeten Methans im Austauscher E02,
f) einen Trennschritt, der ein Trennen des verflüssigten Methans in zwei Teile ermöglicht: einen "Rückflussteil" (6) und einen "Produktteil" (5),
g) einen Schritt des Entspannens und Erwärmens der am Boden der Kolonne gewonnenen, mit CO2 angereicherten Flüssigkeit im Austauscher E01 und des Rückgewinnens der Kälte der mit CO2 angereicherten Flüssigkeit und
h) einen Schritt des Trennens des mit CO2 angereicherten Stroms aus dem Austauscher E01 im Abscheidebehälter V01 in flüssiges CO2 (7) und Kopfdampf,
wobei das Recyclegas R dem in Schritt a) gebildeten Kopfdampf entspricht.

14. Verfahren nach Anspruch 13, **dadurch gekennzeichnet, dass** es vor Schritt a) Trocknungs- und Entschwefelungsschritte umfasst.

15. Verfahren nach einem der Ansprüche 13 oder 14, **dadurch gekennzeichnet, dass** es vor Schritt a) einen Schritt des Komprimierens des Biogases auf den Druck des Recyclegases R umfasst.

## Claims

1. Cryogenic separation unit for separation of methane and carbon dioxide, comprising:
- a distillation column K01 comprising a cold section (2) at the top of the column and a hot section (3) at the bottom of the column,
- a means (4) for physically separating the cold section (2) and the hot section (4),
- at least two containers V04 A/B external to the distillation column, for placing in contact the liquid from the cold section (2) and the vapour rising from the hot section (3) and for trapping all the solid CO₂, and
- a device for regenerating the external containers, comprising a means for extracting a fluid from the distillation column K01 which is capable of liquefying the solid CO₂, a means for introducing this fluid into the external container(s) in regeneration so as to bring about the melting of the solid CO₂ and a means for reintroducing the resulting liquid CO₂-vapour mixture into the distillation column K01.

2. Combined facility for cryogenic separation and liquefaction of methane and carbon dioxide in a biogas stream, comprising:
- a cryogenic separation unit according to Claim 1,
- a means M1 for mixing the biogas (1) with a recycle gas R,
- a compressor for compressing the mixture to the distillation pressure,
- an exchanger E01 for cooling the compressed mixture,
- a cryogenic separation unit according to Claim 1 supplied with the cooled mixture and making it possible to produce methane at the top of the column and a CO₂-enriched liquid at the bottom of the column,
- an exchanger E02 for liquefying the methane produced at the top of the column,
- a means M2 for separating the liquefied methane into two portions: a "reflux" portion (6) and a "product" portion (5),
- a means M3 for expanding and heating the CO₂-enriched liquid recovered at the bottom of the column and for recovering the cold from the CO₂-enriched liquid, and
- a separator vessel V01 for receiving the CO₂-enriched stream from the means M3 and for recovering an overhead vapour and liquid CO₂ (7), with
- the means M1 such that the recycle gas R corresponds to the overhead vapour recovered at the outlet of the separator vessel V01, and
- the exchanger E01 and the means M3 being combined.

3. Facility according to Claim 2, **characterized in that** it comprises, upstream of the means M1, means for drying and desulfurization of the biogas.

4. Facility according to either of Claims 2 and 3, **characterized in that** it comprises, upstream of the means M1, a means C01 for compressing the biogas to the pressure of the recycle gas R.

5. Facility according to one of Claims 2 to 4, **characterized in that** it comprises, upstream of the means M1, a means C01E and/or C02E for cooling the biogas to ambient temperature.

6. Facility according to one of Claims 2 to 5, **characterized in that** the exchanger E02 is within a closed refrigeration circuit.

7. Facility according to Claim 6, **characterized in that** the refrigeration circuit uses methane as refrigerant fluid.

8. Facility according to one of Claims 2 to 7, **characterized in that** the distillation column K01 comprises heating at the bottom of the column.

9. Process of cryogenic separation of methane and carbon dioxide, using the cryogenic unit as defined in Claim 1, comprising:
a) a step of introducing the methane-carbon dioxide mixture into the bottom of the column,
b) a step of removing the liquid from the cold section (2) of the distillation column,
c) a step of removing the vapour from the hot section (3) of the distillation column,
d) a step of introducing the liquid and the vapour removed from steps b) and c) into at least one container external to the distillation column K01 so as to place them in contact and to trap the solid CO₂,
e) a step of regenerating at least one external container, comprising a sub-step of extracting a fluid from the distillation column K01 which is capable of liquefying the solid CO₂, a sub-step of introducing this fluid into the external container(s) in regeneration so as to bring about the melting of the solid CO₂ and a sub-step of reintroducing the resulting liquid CO₂-vapour mixture into the distillation column K01, and
f) a step of recovering methane at the top of the column and a CO₂-enriched liquid at the bottom of the column.

10. Process according to Claim 9, **characterized in that**, in step e), the fluid extracted from the distillation column is vapour obtained from a lower section at a higher temperature of the distillation column K01.

11. Process according to either of Claims 9 and 10, **characterized in that** step d) is performed with control of the temperature of the external container.

12. Process according to one of Claims 9 to 11, **characterized in that**, in step e), at least two external containers are regenerated in series.

13. Combined process of cryogenic separation and liquefaction of methane and carbon dioxide within a biogas stream, using the facility as defined in one of Claims 2 to 8, and comprising:
a) a step of mixing the biogas (1) with a recycle gas R,
b) a step of compressing the mixture to the distillation pressure,
c) a step of cooling the compressed mixture in the exchanger E01,
d) a step of distilling the cooled mixture, according to the process as defined in one of Claims 9 to 12, in the distillation column K01 so as to produce methane at the top of the column and a CO₂-enriched liquid at the bottom of the column,
e) a step of liquefying the methane produced at the top of the column in the exchanger E02,
f) a separation step for separating the liquefied methane into two portions: a "reflux" portion (6) and a "product" portion (5),
g) a step of expanding and heating the CO₂-enriched liquid recovered at the bottom of the column in the exchanger E01, and of recovering the cold from the CO₂-enriched liquid, and
h) a step of separating the CO₂-enriched stream resulting from the exchanger E01 in the separator vessel V01 into liquid CO₂ (7) and overhead vapour,
with the recycle gas R corresponding to the overhead vapour produced in step a).

14. Process according to Claim 13, **characterized in that** it comprises, upstream of step a), steps of drying and of desulfurization.

15. Process according to either of Claims 13 and 14, **characterized in that** it comprises, upstream of step a), a step of compressing the biogas to the pressure of the recycle gas R.
